# EUROPÄISCHE PATENTANMELDUNG

(11) **EP 2 426 568 A1**
(43) Veröffentlichungstag der Anmeldung: **07.03.2012**
(21) Anmeldenummer: 11179677.7
(22) Anmeldetag: 01.09.2011
(51) Int. Cl.: G05D 11/13, A62C 5/00

(54) **Dosiervorrichtung**

(30) Priorität: 06.09.2010 CH 14342010
(71) Anmelder: Tony Brändle AG, 8370 Sirnach (CH)
(72) Erfinder: Brändle, Peter, 9542 Münchwilen (CH)
(74) Vertreter: Hepp Wenger Ryffel AG

(57) **Zusammenfassung**

Die vorliegende Erfindung betrifft eine Dosiervorrichtung zum Beimischen von Additiven zu einem unter Druck stehenden Wasserstrom in einer Wasserleitung, insbesondere an einem Brandbekämpfungssystem, mit einer zu einer Additivquelle führenden Additivleitung, die über ein Regelventil zu einer Wasserleitung führt, wobei das gewünschte Mischverhältnis von Additiv zu Wasser durch ein in der Additivleitung angeordneten Regelventil steuerbar ist, dadurch gekennzeichnet, dass eine Einrichtung zur Speicherung der Einstellungswerte des Regelventils, welche mit einem Regler für das Regelventil operativ verbunden ist und Einstellungswerte für das Regelventil von dem Regler übernehmen beziehungsweise an diesen übergeben kann, und/oder ein Schwarz-Weiss-Ventil in der Additivleitung unmittelbar vor der Zusammenführung mit der Wasserleitung vorhanden ist.

## Beschreibung

Die vorliegende Erfindung betrifft eine verbesserte Dosiervorrichtung, welche vor allem für Brandbekämpfungssysteme vorgesehen ist, bei denen die Brandbekämpfung mit Löschwasser allein of nicht genügt.

Wasser ist wegen seines niedrigen Siedepunktes und seiner hohen Verdampfungswärme sowie der Verdrängung von Sauerstoff durch Bildung von Wasserdampf als Löschmittel für Brände sehr gut geeignet. Es gibt allerdings Brandsituationen, bei denen das Löschen mit Wasser allein nicht opportun ist. Beispielsweise seien Brandherde mit chemischen Stoffen genannt, die mit Wasser heftig reagieren oder bei denen der alleinige Einsatz von Löschwasser zu Siedeverzügen oder explosionsartigen Effekten führt.

Moderne Feuerwehrfahrzeuge sind mit einem Löschsystem ausgestattet, bei welchem dem Wasser Additive, insbesondere Schaum zugesetzt werden kann. Ein derartiges System der Anmelderin ist beispielsweise in der EP-0 295 202 A2 beschrieben.

Bei dem System der EP-0 295 202 A2 wird ein Additiv dem Löschwasser nach der Pumpe zugesetzt, wodurch es zu keiner Verschmutzung der Pumpe kommt. Die Menge an zugesetztem Additiv wird mit Hilfe eines Regelventils gesteuert, welches in der EP-0 230 860 A1 der Anmelderin im Detail beschrieben ist. Um Druckschwankungen in der Wasserleitung auszugleichen, umfasst das System weiterhin ein Druckdifferenzventil in der Additivleitung. Das Druckdifferenzventil sorgt dafür, dass der Druckabfall am Regelventil auch bei sich änderndem Druck in der Additivleitung oder in der Wasserleitung weitgehend konstant bleibt. Die gleich bleibende Druckdifferenz wirkt sich dabei positiv auf die Regelcharakteristik aus, so dass keine nennenswerten Schwankungen beim gewünschten Mischverhältnis auftreten. Dieses Druckdifferenzventil ist in der EP-0 295 202 A2 ausführlich beschrieben.

Auf den Inhalt der EP-0 295 202 A2 und der EP-0 230 860 A1 wird ausdrücklich Bezug genommen.

Während eines Brandbekämpfungseinsatzes kann es vorkommen, dass das Löschsystem für mehr oder weniger lange Zeit unterbrochen werden muss, beispielsweise um die Lage erneut zu prüfen. Während dieser Unterbrechung ist die Additivzufuhr durch Verschliessen der entsprechenden Ventile unterbrochen. Wenn nach der Unterbrechung das Löschen wieder aufgenommen werden soll, benötigt das herkömmliche Schaumsystem einige Sekunden, bis wieder das zuvor verwendete Verhältnis von Wasser zu Additiv erreicht ist. Dies liegt daran, dass beispielsweise der Regler für das Regelventil beziehungsweise das Druckdifferenzventil erst wieder die notwendigen Werte ermitteln und die Ventile entsprechend steuern müssen. Diese geringfügige Verzögerung bis zum Erreichen des gewünschten Zumischgrades kann aber unter bestimmten, vorstehend beschriebenen Umständen unerwünscht bis inakzeptabel sein, da in diesem Zeitraum ausschliesslich mit Wasser gelöscht wird.

Die Aufgabe der vorliegenden Erfindung bestand darin, diesen Nachteil zu beheben.

Gemäss der vorliegenden Erfindung wird diese Aufgabe gelöst durch eine Dosiervorrichtung gemäss Anspruch 1.

Insbesondere betrifft die vorliegende Erfindung eine Dosiervorrichtung zum Beimischen von Additiven zu einem unter Druck stehenden Wasserstrom in einer Wasserleitung, insbesondere an einem Brandbekämpfungssystem, mit einer zu einer Additivquelle führenden Additivleitung, die über ein Regelventil zu einer Wasserleitung führt, wobei das gewünschte Mischverhältnis von Additiv zu Wasser durch ein in der Additivleitung angeordnetes Regelventil steuerbar ist, dadurch gekennzeichnet, dass entweder eine Einrichtung zur Speicherung der Einstellungswerte des Regelventils, welche mit einem Regler für das Regelventil operativ verbunden ist und Einstellungswerte für das Regelventil von dem Regler übernehmen beziehungsweise an diesen übergeben kann, und/oder ein Schwarz-Weiss-Ventil in der Additivleitung unmittelbar vor der Zusammenführung mit der Wasserleitung vorhanden ist.

Gemäss der vorliegenden Erfindung wird der im Stand der Technik notwendige Schritt zur Neuermittlung der Zumisch- und Druckdifferenzwerte in der Dosiervorrichtung bei einem erneuten Anfahren nach einer Unterbrechung dadurch umgangen, dass das Regelventil und gegebenenfalls auch das Druckdifferenzventil sofort wieder in den Zustand vor der Unterbrechung versetzt werden beziehungsweise in diesem Zustand während der Unterbrechung verbleiben.

Gemäss der vorliegenden Erfindung gelingt dies einerseits, indem eine Einrichtung zur Speicherung der Einstellungswerte des Regelventils und gegebenenfalls des Druckdifferenzventils vorgesehen ist. Sobald die Dosiervorrichtung im Einsatz das gewünschte Mischverhältnis von Additiv zu Wasser, gegebenenfalls unter Berücksichtigung der Druckdifferenz in der Wasserleitung, erreicht hat, werden die Stell- und Regelwerte des Regelventils und gegebenenfalls des Druckdifferenzventils vom entsprechenden Regler an diese Einrichtung übergeben und dort gespeichert. Wird nach einer Unterbrechung das System wieder angefahren, werden die gespeicherten Werte von der Einrichtung an die entsprechenden Regler ausgegeben, welche unmittelbar das Regelventil und gegebenenfalls das Druckdifferenzventil in den Zustand unmittelbar vor der Unterbrechung versetzen. Auf dieses Weise gelingt es, die Dosiervorrichtung innerhalb von Bruchteilen von Sekunden wieder in den Zustand unmittelbar vor der Unterbrechung zu versetzen.

Weiterhin oder alternativ kann in der Additivleitung unmittelbar, d.h. vorzugsweise in einem Bereich von 1 bis 20 cm vor der Zusammenführung mit der Wasserleitung ein Schwarz-Weiss-Ventil angeordnet sein. Unter einem Schwarz-Weiss-Ventil wird im hier interessierenden technischen Gebiet ein binär wirkendes Ventil verstanden, welches nur auf und zu macht. Im Fall einer Betriebsunterbrechung wird nur das Schwarz-Weiss-Ventil geschlossen, während das Regelventil und gegebenenfalls das Druckdifferenzventil in ihrem bisherigen Zustand verbleiben. Sobald der Löschvorgang wieder aufgenommen wird, öffnet man nur das Schwarz-Weiss-Ventil, und das Additiv wird unmittelbar wieder im richtigen Verhältnis zugemischt.

Im Fall der Bereitstellung eines Schwarz-Weiss-Ventils ist die Einrichtung zur Speicherung der Einstellungswerte der Ventile prinzipiell entbehrlich. Ebenso ist im Fall der Bereitstellung einer Einrichtung zur Speicherung der Einstellungswerte der Ventile die Bereitstellung eines Schwarz-Weiss-Ventils prinzipiell entbehrlich. Es kann aber vorteilhaft sein, beide Möglichkeiten zur unmittelbaren Wiederherstellung des Zustands vor der Unterbrechung vorzusehen, um je nach Umständen eine der beiden Varianten auswählen zu können.

Einrichtungen zur Speicherung von Einstellungswerten sind prinzipiell bekannt. Beispielhaft seien entsprechende elektronische Speicherelemente genannt, wie sie in gängigen Computern eingesetzt werden. Die Einstellungswerte des oder der Ventile werden auf bekannte Weise ermittelt und von entsprechenden Reglern an die Speichereinrichtung übergeben. Beim erneuten Anfahren der Löscheinrichtung nach einer Unterbrechung werden die gespeicherten Werte auf bekannte Weise aus der Speichereinrichtung herausgelesen und an die Regler für das oder die Ventile übergeben, welche dann anhand dieser Werte Einstellungen an dem oder den Ventilen vornehmen. Der Regler ist entsprechend betrieben, dass er beim Anfahren des Systems bevorzugt auf Werte aus der Speichereinrichtung zurückgreift und nur dann neue Einstellungswerte ermittelt, wenn der Speicher leer ist.

Schwarz-Weiss-Ventile sind wohlbekannt und müssen hier nicht im Detail erläutert werden. Beispielhaft sei ein Schwarz-Weiss-Magnetventil genannt, wie es von der Firma BC-Systemtechnik vertrieben wird.

Gemäss einer bevorzugten Ausführungsform der vorliegenden Erfindung kann der Betrieb der vorliegenden Dosiervorrichtung an den Betriebszustand des Einsatzfahrzeuges gekoppelt sein. Beispielsweise kann der Betrieb der Dosiervorrichtung dadurch unterbrochen beziehungsweise beendet werden, dass bei einem mit einer Gangschaltung versehenen Einsatzfahrzeug einer der Fahrgänge eingelegt wird. Vorzugsweise bewirkt das Einlegen eines Fahrgangs auch das Schliessen des Schwarz-Weiss-Ventils.

Besonders vorteilhafte Resultate können erzielt werden, wenn die Additivmenge mit einer Additivmessvorrichtung vor dem Druckdifferenzventil und die Gemischmenge mit einer Gemischmessvorrichtung nach dem Eintritt der Additivleitung in die Wasserleitung messbar ist. Auf diese Weise bildet der Regler aus der zum Regelventil geführten Additivmenge und aus der gesamten Gemischmenge das entsprechende Regelsignal, um das gewünschte Mischverhältnis aufrecht zu erhalten. Dabei werden auch allfällige Schwankungen bei der der Dosiervorrichtung zugeführten Löschwassermenge berücksichtigt.

Eine besonders einfache Förderung des Additivs kann erreicht werden, wenn die Additivleitung zu einem Drucktank führt, der für die Förderung des Additivs zum Regelventil an eine Druckquelle angeschlossen ist. Das Additiv steht auf diese Weise unter einem weitgehend konstanten Druck jederzeit zur Verfügung, ohne dass eine Förderpumpe erforderlich ist.

Wenn das Additiv mit Hilfe einer Förderpumpe gefördert wird, können weitere Vorteile dadurch erreicht werden, dass die Antriebsvorrichtung für die Förderpumpe in Wirkverbindung mit dem Stellglied steht, so dass die Antriebsvorrichtung in Abhängigkeit von der Position des Regelventils steuerbar ist. Ersichtlicherweise muss nämlich die Förderpumpe eine grössere Förderleistung erbringen, wenn das Regelventil vollständig geöffnet ist, so dass die maximale Additivmenge gefördert werden muss. Bei nur gering geöffnetem Regelventil ist es jedoch nicht erforderlich, dass die Förderpumpe bzw. die Antriebsvorrichtung mit der maximalen Leistung betrieben wird. Es genügt eine der tatsächlich erforderlichen Fördermenge entsprechende Leistung, womit Energie gespart und die Lärmentwicklung reduziert werden kann. Ein weiterer Vorteil der Anpassung der Förderleistung besteht darin, dass sich das Additiv nicht unnötig erwärmt. Die zuviel geförderte Menge muss nämlich wieder zurückgeführt werden, womit eine Erwärmung verbunden ist.

Die von der erforderlichen Förderleistung abhängige Steuerung lässt sich besonders einfach realisieren, wenn die Antriebsvorrichtung ein der Förderpumpe zugeordneter Benzinmotor mit einem Drehzahlregler ist und wenn der Drehzahlregler mit einem Seilzug oder mit einem Gestänge oder elektronisch mit dem Regelventil derart verbunden ist, dass mit zunehmender Ventilöffnung die Drehzahl steigt. Die Drehzahl des Benzinmotors lässt sich auf bekannte Weise über die Drosselklappe am Vergaser regeln. Die stellungsabhängige Wegveränderung am Regelventil lässt sich durch einen Seilzug oder durch ein Gestänge oder durch entsprechende elektronische Signale optimal auf den Drehzahlregler am Benzinmotor übertragen. Bei nur minimal geöffnetem Regelventil macht der Benzinmotor daher nur minimale Drehzahl, wodurch der Benzinverbrauch erheblich gesenkt werden kann.

Einsparungen lassen sich aber auch auf optimale Weise erreichen, wenn die Antriebsvorrichtung ein Nebenabtrieb eines systemfremden Hauptantriebs ist und wenn die Drehzahl des Nebenabtriebes mit einem Getriebe stufenweise oder stufenlos steuerbar ist, das vom Regelventil oder vom Regler gesteuert wird. Ist die Dosiervorrichtung beispielsweise auf einem Löschfahrzeug mit einer Antriebsvorrichtung für Hydrauliksysteme usw. angeordnet, so benötigt die Förderpumpe nicht unbedingt eine eigene Antriebseinheit. Es genügt dabei ohne weiteres, die Förderpumpe an einen Nebenabtrieb anzuschliessen. Die Förderpumpe kann dabei über ein Getriebe an den Nebenabtrieb gekuppelt werden, welches je nach der Stellung des Regelventils die Drehzahl verändert.

Die Rückführung von zuviel gefördertem Additiv kann weiter dadurch optimiert werden, dass zwischen der Förderpumpe und der Additivmessvorrichtung eine Rückführleitung an die Additivleitung angeschlossen ist, welche zur Additivquelle zurückführt und wenn in der Rückführleitung ein Überdruckventil angeordnet ist, das beim Überschreiten eines vorbestimmbaren Druckes in der Additivleitung öffnet und derart additiv aus der Additivleitung zur Additivquelle zurückführt.

Eine besonders vielseitige Anwendung der Dosiervorrichtung ergibt sich, wenn die Additivquelle ein Additivtank ist und wenn vor der Förderpumpe ein Wegeventil in der Additivleitung angeordnet ist, das vom Additivtank auf wenigstens eine zusätzliche

Additivleitung umschaltbar ist, die zu einer externen Additivquelle führt. Auf diese Weise ist es möglich, ohne Abschaltung des Systems kurzfristig auf ein anderes Additiv umzuschalten, das entweder ebenfalls in einem Tank mitgeführt wird oder das beispielsweise aus einem Kanister oder Fass abgesaugt wird. Je nach Anzahl der Anschlüsse des Wegeventils könnten sogar wahlweise verschiedene Additive wechselweise beigemischt werden.

Die vorliegende Erfindung betrifft auch ein Verfahren zur Steuerung der vorstehend beschriebenen Dosiervorrichtung, gekennzeichnet durch die Schritte
a) Ermittlung von Einstellungswerten für eine in der Additivleitung angeordneten Regelventil während des Betriebs der Dosiereinheit;
b) Übergabe der ermittelten Einstellungswerte an eine Einrichtung zur Speicherung der Einstellungswerte des Regelventils, in welcher sie gespeichert werden;
c) Übergabe der gespeicherten Einstellungswerte im Falle einer Wiederaufnahme des Betriebs nach einer Unterbrechung von der Einrichtung zur Speicherung der Einstellungswerte an Regler zur Regulierung des Regelventils; und
d) Einstellung des Regelventils auf den Wert, welches es während des Betriebs im Schritt a) eingenommen hatte;
e) alternativ zu oder zusammen mit den Schritten a) bis d) den Schritt der Betätigung eines Schwarz-Weiss-Ventils, welches in der Additivleitung unmittelbar vor der Zusammenführung mit der Wasserleitung vorhanden ist, im Fall einer Unterbrechung des Löschvorgangs sowie bei der Wiederaufnahme des Löschvorgangs jeweils ohne Veränderung der Einstellung des Regelventils.

Gemäss einer bevorzugten Ausführungsform umfasst das erfindungsgemässe Verfahren auch, dass in den Schritten a) bis d) zusätzlich Einstellungswerte für ein in der Additivleitung angeordnetes Druckdifferenzventil während des Betriebs der Dosiereinheit ermittelt, an die Einrichtung zur Speicherung der Einstellungswerte übergeben und dort gespeichert, im Falle einer Wiederaufnahme des Betriebs nach einer Unterbrechung von der Einrichtung zur Speicherung der Einstellungswerte an Regler übergeben und das Druckdifferenzventil auf den Wert, welches es während des Betriebs im Schritt a) eingenommen hatte, eingestellt wird.

Gemäss einer weiteren Ausführungsform der vorliegenden Erfindung können die in der Einrichtung zur Speicherung der Einstellungswerte enthaltenen Regelwerte für das oder die Ventile vor der Rückgabe an das oder die Ventile auch modifiziert, zum Beispiel leicht erhöht werden. Auf diese Weise ist es möglich, nach dem Anfahren des Systems zunächst eine kurze "Übersteuerungsperiode" vorzusehen, in welcher durch grösseres Öffnen des oder der Ventile mehr Schaum, z.B. bis zu 1-10% mehr Schaum, als im letzten Betriebeszustand zugemischt wird. Diese Übersteuerungsperiode kann beispielsweise für 1 bis 5 Sekunden andauern, ehe die Ventile die Werte aus dem letzten Betriebszustand vor Unterbrechung des Betriebs aus der Speichereinheit erhalten und in diesen Zustand weiterbetrieben werden.

Die erfindungsgemässe Dosiervorrichtung umfasst weiterhin eine Einrichtung zur Erstellung und Ausgabe eines Einsatzprotokolls. Dieses Einsatzprotokoll ist sehr detailliert und umfasst unter anderem den Verbrauch an Wasser und Schaum pro Einsatz.

Die erfindungsgemässe Dosiervorrichtung ermöglicht eine elektronisch geregelte, gleich bleibende Dosierung von Additiv, vorzugsweise Schaummittel, in das Löschwasser. Vorzugsweise kann die Zumischrate in einem Bereich von 0.2%-10%, vorzugsweise 0.3% bis 6%, in Abstufungen von 0.5% oder 1% frei gewählt werden. Bei einer Ausführungsform mit mehreren Gemischanschlüssen kann an jedem Gemischanschluss das Mischungsverhältnis individuell und separat eingestellt werden, so dass gleichzeitig verschiedene Gemische aus der Dosiervorrichtung entnommen werden können. indem man sowohl die Wasserleitung als auch die Additivleitung in verschiedene Unterleitungen aufteilt, wobei jede Additivunterleitung ein eigenes Regelventil und gegebenenfalls Druckdifferenzventil aufweist, welche unabhängig voneinander geregelt werden können, ansonsten aber identisch mit den nachstehend beschriebenen Ventilen sind. Auf diese Weisse können den jeweiligen Wasserunterleitungen unterschiedliche Mengen an Additiv zugeführt werden.

Mit der erfindungsgemässen Dosiervorrichtung kann über den gesamten Mischungsbereich ein sehr exaktes Mischverhältnis erreicht werden, da die Regelung des Mischverhältnisses über Volumenmessungen erfolgt.

Die erfindungsgemässe Dosiervorrichtung ist für sämtliche gängige Löschgemische verwendbar.

Die vorliegende Erfindung wird nachstehend anhand von nicht einschränkenden Beispielen und Zeichnungen näher erläutert.

Es zeigen:
- Figur 1: Die schematische Darstellung einer erfindungsgemässen Dosiervorrichtung mit einer Einrichtung zur Speicherung von Einstellungswerten;
- Figur 2: Die schematische Darstellung einer erfindungsgemässen Dosiervorrichtung mit einem Schwarz-Weiss-Ventil.

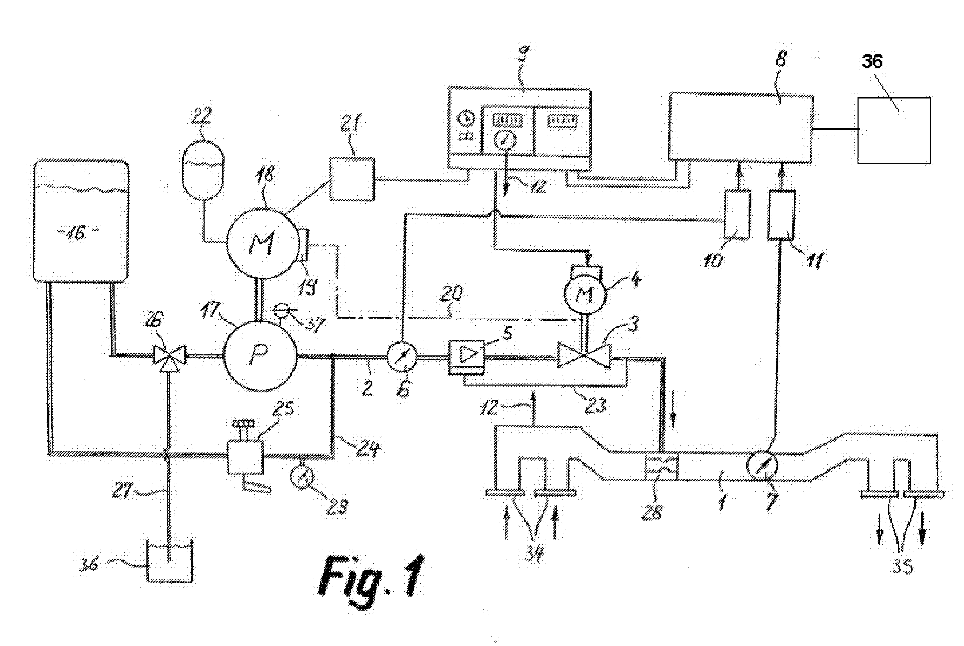

Wie in Figur 1 dargestellt hat die Wasserleitung 1 zwei Wasseranschlüsse 34, an welche z.B. ein Hydrant oder der Ausgang einer Wasserpumpe angeschlossen werden kann. Eine Additivleitung 2 führt zur Wasserleitung 1, wo das Additiv über eine Mischvorrichtung 28 in den Wasserstrom beigemischt wird. Die Mischvorrichtung kann z.B. eine Ringleitung sein, die sich um die Innenwand der Wasserleitung 1 erstreckt und das Additiv kreisförmig in den Wasserstrom einspeist. Das Gemisch steht im gewünschten Mischungsverhältnis an den beiden Gemischanschlüssen 35 zur Verfügung.

Um das gewünschte Mischungsverhältnis möglichst konstant zu halten, ist in der Additivleitung 2 ein Regelventil 3 angeordnet. Dieses Regelventil ist mit einem Stellglied 4 verbunden, welches von einem Regler 8 Steuerimpulse erhält. An einer Bedienungsplatte 9 ist dabei das gewünschte Mischungsverhältnis einstellbar. Für die Ermittlung des tatsächlichen Mischungsverhältnisses bzw. für die Nachregelung bei Abweichungen vom Sollzustand ist in die Additivleitung eine Additivmessvorrichtung 6 eingebaut. Diese misst die dem Regelventil 3 zugeführte Additivmenge. Die gesamte Gemischmenge wird über eine Gemischmessvorrichtung 7 in der Wasserleitung 1 ermittelt. Die Signale von den beiden Messvorrichtungen 6 und 7 werden je einem Messwertumformer 10 und 11 zugeführt, welche der Durchflussmenge proportionale Signale an den Regler 8 abgeben. Aufbau und Funktion dieses Reglers sind im Wesentlichen bereits in der EP-0 230 860 A1 der Anmelderin beschrieben.

Um den Druckabfall am Regelventil möglichst konstant zu halten, ist vor dem Regelventil 3 ein Druckdifferenzventil 5 in die Additivleitung 2 geschaltet. Eine Steuerleitung 23 ermittelt dabei den Druck nach dem Regelventil 3, der je nach Wasserdruck in der Wasserleitung schwanken kann. Dieser Steuerdruck erlaubt dem Druckdifferenzventil die Konstanthaltung eines vorher einstellbaren Druckabfalls von beispielsweise 1 bar. Der Wasserdruck an den Wasseranschlüssen 34 ist einstellbar von beispielsweise 0 bis 12 bar. Dieser Druck wird an einer Manometerleitung 12 ermittelt und kann an der Bedienungsplatte abgelesen werden.

Das Additiv wird aus einem Additivtank 16 entnommen und mit einer Förderpumpe 17 gefördert. Die Förderpumpe 17, beispielsweise eine Membrankolbenpumpe, ist an einem Benzinmotor 18 angeschlossen. Der Benzinmotor mit einer Leistung von beispielsweise 11 PS wird aus einem Benzintank 22 mit Brennstoff versorgt. Für den Start des Benzinmotors dient eine Startvorrichtung 21, die von der Bedienungsplatte 9 aus betätigt werden kann. Der Benzinmotor 18 ist mit einem Drehzahlregler 19 versehen, der die Drehzahl von beispielsweise 2000 bis 4200 U/Min. regulieren kann. Der Drehzahlregler ist über einen Seilzug 20 mit dem Regelventil 3 bzw. mit dessen Spindel verbunden. Eine Verschiebung der Ventilspindel hat somit eine Betätigung des Drehzahlreglers zur Folge. Dabei wird bei ganz offenem Regelventil 3 die maximale Drehzahl des Benzinmotors 18 erreicht. Anstelle des Seilzuges wäre auch ein Gestänge denkbar. Selbstverständlich könnte der Drehzahlregler 19 auch auf anderem Wege, beispielsweise durch elektrische oder optische Signale Steuerbefehle vom Regelventil 3 bzw. von dessen Stellglied 4 erhalten. Es wäre schliesslich auch denkbar, den Drehzahlregler 19 vom Regler 8 aus zu steuern.

Unmittelbar nach der Förderpumpe 17 ist eine Rückführleitung 24 an die Additivleitung 2 angeschlossen. Diese Rückführleitung ist mit einem Überdruckventil 25 versehen, welches so eingestellt werden kann, dass es bei einem gewünschten Überdruck anspricht. Der in der Additivleitung 2 vorhandene Druck kann am Manometer 29 abgelesen werden. Wird in der Additivleitung ein bestimmter Druck von beispielsweise 15 bar überschritten, so öffnet das Überdruckventil 25 und führt nicht benötigtes Additiv zurück in den Additivtank 16. Das Überdruckventil 25 kann mit einem Handgriff überbrückt werden, so dass zum Anfahren die gesamte durch die Förderpumpe 17 geförderte Additivmenge wieder zurück zum Additivtank 16 strömt. Sobald die Förderpumpe 17 normal arbeitet und der gewünschte Betriebsdruck erreicht ist, wird das Überdruckventil 25 auf Betrieb geschaltet, so dass es nur noch beim gewünschten Überdruck anspricht.

Vor der Förderpumpe 17 ist ein Wegeventil 26 in die Additivleitung 2 eingeschaltet, welches vom Fördertank 16 auf wenigstens eine zusätzliche Additivleitung 27 schaltbar ist. So kann ohne Betriebsunterbruch durch Betätigung des Wegeventils 26 beispielsweise ein alternatives Additiv aus einem Fass 36 abgepumpt werden.

Ersichtlicherweise werden Pumpenleistung, Rohrdurchmesser, Ventil- und Reglercharakteristik jeweils dem Einzelfall angepasst. Das Mischungsverhältnis, das an der Bedienungsplatte 9 programmiert werden kann, beträgt beispielsweise null bis zehn Prozent Additiv von der gesamten mit der Gemischmessvorrichtung 7 ermittelten Durchflussmenge. Die Gemischmenge kann beispielsweise 180 bis 2000 l/Min. betragen. Um ein durch die Charakteristik der Förderpumpe 17 bedingtes zu starkes Pulsieren der Additivmenge zu vermeiden, kann die Förderpumpe 17 mit einem Pulsationsdämpfer 37 versehen sein, der die Druckstösse in der Additivleitung 2 ausgleicht. Das Druckdifferenzventil 5 wird in der Regel vom Hersteller fest eingestellt und muss später nicht mehr verstellt werden. Bei sinkender Förderleistung in der Additivleitung 2 kann die Druckdifferenz ansteigen von beispielsweise 1 bar bei 100 l/Min. auf 2,5 bar bei weniger als 10 1/Min. Bei den normalerweise üblichen Fördermengen in der Additivleitung 2 bleibt die Druckdifferenz jedoch weitgehend konstant.

Erfindungsgemäss ist eine Einrichtung 36 zur Speicherung der Einstellungswerte des Regelventils beziehungsweise des Differenzdruckventils vorgesehen. Diese Einrichtung ist operativ mit dem Regler 8 verbunden und kann von diesem Einstellungswerte übernehmen beziehungsweise Einstellungswerte an diesen übergeben. Beispielsweise kann es sich bei der Einrichtung 36 um ein Speichermodul handeln, wie es gängigerweise in Computern verwendet wird.

Obwohl in Fig. 1 nicht explizit gezeigt, kann die erfindungsgemässe Dosiervorrichtung generell auch mehrere verschiedene Gemischanschlüsse aufweisen, aus denen Wasser-Additiv-Gemische mit unterschiedlichen Mischverhältnissen entnommen werden können. Dies ist möglich, indem man sowohl die Wasserleitung 1 als auch die Additivleitung 2 in verschiedene Unterleitungen aufteilt, wobei jede Additivunterleitung ein eigenes Regelventil 3 und gegebenenfalls Druckdifferenzventil 5 aufweist, welche unabhängig voneinander geregelt werden können, ansonsten aber identisch mit den nachstehend beschriebenen Ventilen sind. Auf diese Weisse können den jeweiligen Wasserunterleitungen unterschiedliche Mengen an Additiv zugeführt werden.

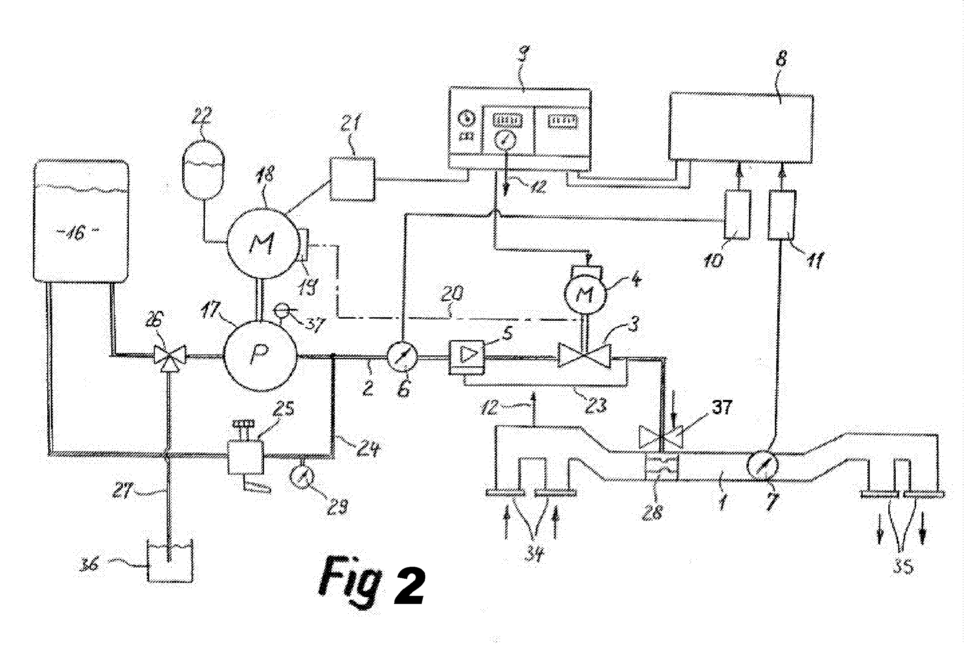

In Fig. 2 ist eine analoge Dosiervorrichtung wie in Fig. 1 gezeigt. Allerdings ist statt der Einrichtung 36 ein Schwarz-Weiss-Ventil 37 unmittelbar vor der Mischvorrichtung 28 vorgesehen.

Obwohl in Fig. 2 nicht explizit gezeigt, kann die erfindungsgemässe Dosiervorrichtung generell auch hier mehrere verschiedene Gemischanschlüsse aufweisen, aus denen Wasser-Additiv-Gemische mit unterschiedlichen Mischverhältnissen entnommen werden können. Dies ist möglich, indem man sowohl die Wasserleitung 1 als auch die Additivleitung 2 in verschiedene Unterleitungen aufteilt, wobei jede Additivunterleitung ein eigenes Regelventil 3 und gegebenenfalls Druckdifferenzventil 5 aufweist, welche unabhängig voneinander geregelt werden können, ansonsten aber identisch mit den nachstehend beschriebenen Ventilen sind. Auf diese Weisse können den jeweiligen Wasserunterleitungen unterschiedliche Mengen an Additiv zugeführt werden. In dieser Ausführungsform ist vor jeder Zusammenführung von Additiv- und Wasserunterleitungen ein separates Schwarz-Weiss-Ventil bereitgestellt, welches wie vorstehend beschrieben funktioniert.

## Patentansprüche

1. Dosiervorrichtung zum Beimischen von Additiven zu einem unter Druck stehenden Wasserstrom in einer Wasserleitung, insbesondere an einem Brandbekämpfungssystem, mit einer zu einer Additivquelle führenden Additivleitung, die über ein Regelventil zu einer Wasserleitung führt, wobei das gewünschte Mischverhältnis von Additiv zu Wasser durch das in der Additivleitung angeordneten Regelventil steuerbar ist, **dadurch gekennzeichnet, dass** eine Einrichtung zur Speicherung der Einstellungswerte des Regelventils, welche mit einem Regler für das Regelventil operativ verbunden ist und Einstellungswerte für das Regelventil von dem Regler übernehmen beziehungsweise an diesen übergeben kann, und/oder ein Schwarz-Weiss-Ventil in der Additivleitung unmittelbar vor der Zusammenführung mit der Wasserleitung vorhanden ist.

2. Dosiervorrichtung nach Anspruch 1, **dadurch gekennzeichnet, dass** zusätzlich ein in der Additivleitung angeordnetes Druckdifferenzventil vorhanden ist und die Einrichtung zur Speicherung der Einstellungswerte des Regelventils auch zur Speicherung der Einstellungswerte des Druckdifferenzventil vorgesehen ist.

3. Dosiervorrichtung nach Anspruch 1 oder 2, **dadurch gekennzeichnet, dass** die Vorrichtung durch Aufteilung der Wasserleitung als auch der Additivleitung in verschiedene Unterleitungen mehrere Gemischanschlüsse umfasst, wobei jede Additivunterleitung ein eigenes Regelventil und gegebenenfalls Druckdifferenzventil aufweist, welche unabhängig voneinander geregelt werden können.

4. Verfahren zur Steuerung einer Dosiervorrichtung gemäss einem der Ansprüche 1 bis 3, **gekennzeichnet durch** die Schritte
a) Ermittlung von Einstellungswerten für ein in der Additivleitung angeordnetes Regelventil während des Betriebs der Dosiereinheit;
b) Übergabe der ermittelten Einstellungswerte an eine Einrichtung zur Speicherung der Einstellungswerte des Regelventils, in welcher sie gespeichert werden;
c) Übergabe der gespeicherten Einstellungswerte im Falle einer Wiederaufnahme des Betriebs nach einer Unterbrechung von der Einrichtung zur Speicherung der Einstellungswerte an Regler zur Regulierung des Regelventils; und
d) Einstellung des Regelventils auf den Wert, welches es während des Betriebs im Schritt a) eingenommen hatte;
e) alternativ zu oder zusammen mit den Schritten a) bis d) den Schritt der Betätigung eines Schwarz-Weiss-Ventils, welches in der Additivleitung unmittelbar vor der Zusammenführung mit der Wasserleitung vorhanden ist, im Fall einer Unterbrechung des Löschvorgangs sowie bei der Wiederaufnahme des Löschvorgangs jeweils ohne Veränderung der Einstellung des Regelventils.

5. Verfahren nach Anspruch 4, **dadurch gekennzeichnet, dass** in den Schritten a) bis d) zusätzlich Einstellungswerte für ein in der Additivleitung angeordnetes Druckdifferenzventil während des Betriebs der Dosiereinheit ermittelt, an die Einrichtung zur Speicherung der Einstellungswerte übergeben und dort gespeichert, im Falle einer Wiederaufnahme des Betriebs nach einer Unterbrechung von der Einrichtung zur Speicherung der Einstellungswerte an Regler übergeben und das Druckdifferenzventil auf den Wert, welches es während des Betriebs im Schritt a) eingenommen hatte, eingestellt wird.

6. Verfahren Anspruch 4 oder 5, **dadurch gekennzeichnet, dass** die Vorrichtung durch Aufteilung der Wasserleitung als auch der Additivleitung in verschiedene Unterleitungen mehrere Gemischanschlüsse umfasst, wobei jede Additivunterleitung ein eigenes Regelventil und gegebenenfalls Druckdifferenzventil aufweist, wobei die Schritte a) bis e) für jedes Regelventil und gegebenenfalls Druckdifferenzventil separat und unabhängig voneinander durchgeführt werden.

7. Verfahren nach einem der Ansprüche 4 bis 6, **dadurch gekennzeichnet, dass** der Betrieb der vorliegenden Dosiervorrichtung an den Betriebszustand des Einsatzfahrzeuges gekoppelt ist.

8. Verfahren nach Anspruch 7, **dadurch gekennzeichnet, dass** der Betrieb der Dosiervorrichtung dadurch unterbrochen beziehungsweise beendet wird, dass bei einem mit einer Gangschaltung versehenen Einsatzfahrzeug einer der Fahrgänge eingelegt wird.

9. Verfahren nach einem der Ansprüche 4 bis 8, **dadurch gekennzeichnet, dass** ein Einsatzprotokoll erstellt und ausgegeben wird, welches den Verbrauch an Wasser und Schaum pro Einsatz umfasst.
